# EUROPEAN PATENT SPECIFICATION

(11) **EP 3 854 163 B1**
(45) Date of publication and mention of the grant of the patent: **02.04.2025**
(21) Application number: 19862364.7
(22) Date of filing: 17.07.2019
(51) Int. Cl.: H04W 72/566, H04W 72/21

(54) **METHOD AND APPARATUS FOR ADAPTIVE PRIORITY CONTROL BETWEEN CONTROL INFORMATION AND USER DATA**
VERFAHREN UND VORRICHTUNG ZUR ADAPTIVEN PRIORITÄTSSTEUERUNG ZWISCHEN STEUERINFORMATIONEN UND BENUTZERDATEN
PROCÉDÉ ET APPAREIL POUR UN CONTRÔLE ADAPTATIF DE PRIORITÉ ENTRE DES INFORMATIONS DE COMMANDE ET DES DONNÉES UTILISATEUR

(30) Priority: 18.09.2018 WO PCT/CN2018/106307
(43) Date of publication of application: 28.07.2021
(73) Proprietor: Telefonaktiebolaget LM Ericsson (publ), 164 83 Stockholm (SE)
(72) Inventor: WANG, Min, 977 53 Luleå (SE); LIU, Jinhua, Beijing 100102 (CN)
(74) Representative: Ericsson
(86) International application number: PCT/CN2019/096364
(87) International publication number: WO 2020/057240

(56) References cited:
- EP-A1- 3 358 901
- WO-A1-2017/024557
- WO-A1-2018/141952
- CN-A- 102 685 895
- CN-A- 106 954 277
- US-A1- 2006 274 690
- US-A1- 2017 332 392

## Description

### FIELD OF THE INVENTION

The present disclosure generally relates to communication networks, and more specifically, to determine the priority for the control information and user data, and transmit according to the determined priority.

### BACKGROUND

This section introduces aspects that may facilitate a better understanding of the disclosure. Accordingly, the statements of this section are to be read in this light and are not to be understood as admissions about what is in the prior art or what is not in the prior art.

As mobile communication technology advances, there has been a growing consensus that new radio (NR) networks/fifth generation (5G) wireless systems will support three generic services, which, according to the International Telecommunication Union Radio communication Sector (ITU-R), are classified as enhanced mobile broadband (eMBB), massive machine-type communications (mMTC), and ultra-reliable and low-latency communications (URLLC). There are different requirements for the three services. In short, eMBB supports stable connections with very high peak data rates, as well as moderate rates for cell-edge users; mMTC supports a massive number of Internet of Things (IoT) devices, which are only sporadically active and send small data payloads; and URLLC supports low-latency transmissions of small payloads with very high reliability from a limited set of terminals, which are active according to patterns typically specified by outside events. That means, NR supports multiple services with various differentiated QoS requirements for the same user equipment (UE). For instance, a UE may have co-existing URLLC service and other lower priority services such as entertainment services (e.g. web surfing, video, music etc.), and URLLC contains services for latency sensitive devices for applications like factory automation, autonomous driving, and remote surgery. NR network shall be able to guarantee QoS for all services according to their respective service priority levels. Typically, URLLC is treated with high priority compared to other services such as entertainment services, which means that URLLC should not be interfered by those entertainment services.
The document "US 20060274690A1" discloses a method in which a mobile terminal efficiently transmits the control information to a base station enabling scheduled and non-scheduled transmission.
The document "WO2018141952A1" discloses a method for improving the implementation of Logical Channel Prioritization (LCP) in advanced wireless communication networks.

Buffer Status Report (BSR) is a kind of MAC Control Element (CE) from UE to Network carrying the information on how much data is in UE buffer to be transmitted. The network would allocate the amount of UL Grant (Resources for PUSCH) if the resource is available. With this mechanism, the network can optimize UL resources based on following logics: allocating UL resources (UL Grant) only when a UE has something to transmit; avoiding allocation of too much UL resources (more than what the UE needs) which may lead to waste of resources.

Power headroom indicates how much transmission power left for a UE to use in addition to the power being used by current transmission. Simply put, it can be described by a formula as below: Power Headroom = UE Max Transmission Power - PUSCH Power. Power Headroom Report (PHR) is a type of MAC CE that reports the headroom between the current UE transmit (Tx) power (estimated power) and the nominal power. Network uses this report value to estimate how much uplink bandwidth a UE can use for a specific subframe. Since the more resource block the UE is using, the higher UE transmit power gets, but the UE Tx power should not exceed the max power defined in the 3GPP specification. So a UE cannot use many resource blocks or much bandwidth if it does not have enough power headroom.

For the user data such as logical channels (LCHs) and control information such as MAC CEs transmission, the following has been defined in 3GPP: Logical channels shall be prioritized in accordance with the following order (highest priority listed first):
- C-RNTI MAC CE or data from UL-CCCH;
- Configured Grant Confirmation MAC CE;
- MAC CE for BSR, with exception of BSR included for padding;
- Single Entry PHR MAC CE or Multiple Entry PHR MAC CE;
- data from any Logical Channel, except data from UL-CCCH;
- MAC CE for Recommended bit rate query;
- MAC CE for BSR included for padding.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The inventions is set out in the appended claims.

According to the current specification, it is observed that the control information, such as the regular/periodic BSR MAC CE and PHR MAC CE are of higher priority than user data of any logical channels, including the URLLC data. But some types of user data such as the URLLC data requires ultra-low delay and ultra-reliability for data transmission. It may not be proper to always transmit control information such as BSR or PHR before some types of user data such as URLLC data.

The present disclosure proposes a solution of determining relative priority between user data such as an LCH (or service, logical channel group) and control information such as a BSR or PHR MAC CE as illustrated in the appended claims.

With the present disclosure, the UL resource allocation between user data such as an LCH (or service, logical channel group) and control information such as a MAC CE is optimized. In addition, the quality of service (QoS) of URLLC can be improved.

### BRIEF DESCRIPTION OF THE DRAWINGS

The disclosure itself, the preferable mode of use and further objectives are best understood by reference to the following detailed description of the embodiments when read in conjunction with the accompanying drawings, in which:
Fig.1 is a diagram illustrating an exemplary device architecture according to an embodiment of the present disclosure;
Fig.2 is a flowchart illustrating a method according to some embodiments of the present disclosure;
Fig.3 is a flowchart illustrating another method according to some embodiments of the present disclosure;
Fig.4 is a block diagram illustrating an apparatus according to some embodiments of the present disclosure;
Fig.5 is a block diagram illustrating another apparatus according to some embodiments of the present disclosure;
Fig.6 is a block diagram illustrating yet another apparatus according to some embodiments of the present disclosure;
Fig.7 is a block diagram illustrating yet another apparatus according to some embodiments of the present disclosure;
Fig.8 is a block diagram illustrating a telecommunication network connected via an intermediate network to a host computer in accordance with some embodiments of the present disclosure;
Fig.9 is a block diagram illustrating a host computer communicating via a base station with a UE over a partially wireless connection in accordance with some embodiments of the present disclosure;
Fig.10 is a flowchart illustrating a method implemented in a communication system, in accordance with an embodiment of the present disclosure;
Fig.11 is a flowchart illustrating a method implemented in a communication system, in accordance with an embodiment of the present disclosure;
Fig.12 is a flowchart illustrating a method implemented in a communication system, in accordance with an embodiment of the present disclosure; and
Fig.13 is a flowchart illustrating a method implemented in a communication system, in accordance with an embodiment of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "communication network" refers to a network following any suitable communication standards, such as new radio (NR), long term evolution (LTE), LTE-Advanced, wideband code division multiple access (WCDMA), high-speed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "network node" refers to a network device in a communication network via which a terminal device accesses to the network and receives services therefrom. The network node may refer to a base station (BS), an access point (AP), a multi-cell/multicast coordination entity (MCE), a controller or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

Yet further examples of the network node comprise multi-standard radio (MSR) radio equipment such as MSR BSs, network controllers such as radio network controllers (RNCs) or base station controllers (BSCs), base transceiver stations (BTSs), transmission points, transmission nodes, positioning nodes and/or the like. More generally, however, the network node may represent any suitable device (or group of devices) capable, configured, arranged, and/or operable to enable and/or provide a terminal device access to a wireless communication network or to provide some service to a terminal device that has accessed to the wireless communication network.

The term "terminal device" refers to any end device that can access a communication network and receive services therefrom. By way of example and not limitation, the terminal device may refer to a mobile terminal, a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like. In the following description, terms "terminal device" and "UE" will be used interchangeably.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

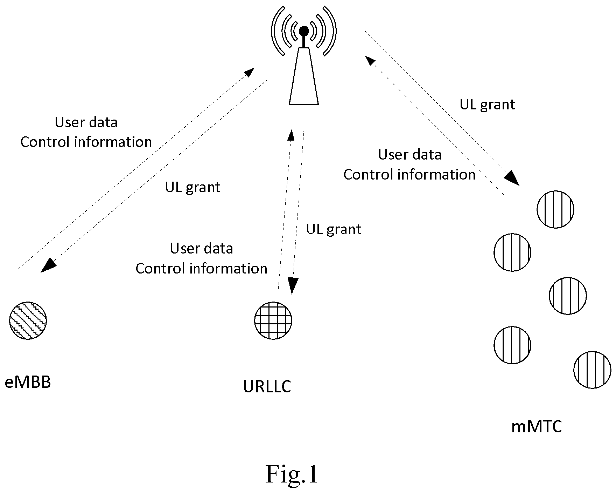

Fig.1 is a diagram illustrating an exemplary device architecture according to an embodiment of the present disclosure. The diagram in Fig. 1 may represent a simplified architecture of a terminal device such as a UE which may be connected to a network node such as a base station in a wireless communication network. For simplicity, the device architecture of Fig.1 only depicts some exemplary components such as the UE transmitting two types of data to the gNB and gNB transmitting an uplink grant to the UE. In practice, a terminal device according to some embodiments of the present disclosure may further include any additional elements or components suitable to support communication between the terminal device and a network node (such as a gNB) or another terminal device.

As shown in Fig.1, multiple terminal devices support three types of services, which are eMBB, URLLC and mMTC. Each of the terminal devices may get UL grants to transmit user data or control information. The services may be URLLC service or entertainment services such as web surfing, video, music etc. The different services may have differentiated QoS requirements. Typically, URLLC is treated with high priority compared to other services such as entertainment services, which means that URLLC should not be interfered by those entertainment services. The control information may be BSR to let the network node know how much data in UE buffer is to be sent out. So the network node will allocate UL resource for the UE. The control information may also be PHR to let the network node know how much transmission power left for a UE to use in addition to the power being used by current transmission. The network node may use this report to estimate how much uplink bandwidth a UE can use for a specific subframe. Since the more resources the UE is using, the higher UE Tx power gets, but the UE Tx power should not exceed the max power defined in the specification. So a UE cannot use many resource blocks or much bandwidth if it does not have enough power headroom.

As described above, because the control information, such as the regular/periodic BSR MAC CE and PHR MAC CE are of higher priority than user data of any logical channels, including the URLLC data. Regular/periodic BSR MAC CE and PHR MAC CE may be carried in the Physical Uplink Shared Channel (PUSCH) while the URLLC data may be left in the transmission buffer of UE, when the resources indicated by the uplink (UL) grant is insufficient to accommodate both the MAC CEs and the URLLC data. This may result in the long delay of the buffered URLLC data in the transmission buffer of UE.

The followings are the two examples for this problem:

### Example 1: URLLC data delay when regular/periodic BSR MAC CE is of higher priority than URLLC data

In this case, when the capacity provided by the UL grant is large enough to carry all the URLLC data but not enough to carry both of all URLLC data and the regular/periodic BSR MAC CE, partial URLLC data and the BSR MAC CE will be carried using the granted resources and there is still some URLLC data queuing in UE side. The queued URLLC data shall wait for another grant and such a delay could be unendurable for URLLC service with very tight delay budget, e.g. shorter than 1 millisecond.

### Example 2: URLLC data delay when PHR MAC CE is of higher priority than URLLC data

When the resources indicated by the UL grant can accommodate all URLLC data but not both URLLC data and PHR MAC CE, higher priority for PHR than URLLC data may result in long delay of URLLC data.

Therefore, leaving the control of priority determination between control information such as MAC CEs and use data such as logical channels (LCHs) fully to the network may be insufficient. The more advanced mechanism to give more control to UE should be developed.

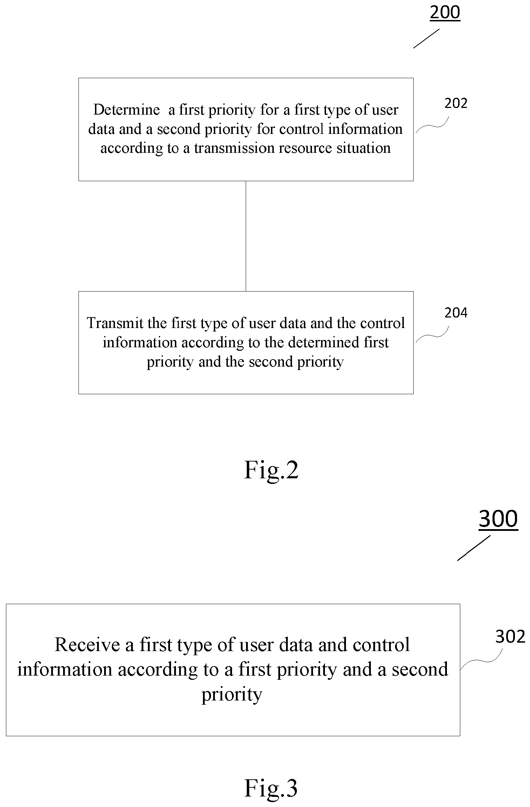

Fig.2 is a flowchart illustrating a method 200 according to some embodiments of the present disclosure. The method 200 illustrated in Fig.2 may be performed by an apparatus implemented in a terminal device or communicatively coupled to a terminal device.

According to the exemplary method 200 illustrated in Fig.2, the terminal device such as a UE can determine a first priority for a first type of user data and a second priority for control information according to a transmission resource situation, as shown in block 202. In accordance with an exemplary embodiment, the network node may have configured priorities for the control information and the user data, but the terminal device can determine the priority between user data such as LCHs and control information such as MAC CEs by itself. Optionally, the terminal device can inform the new priority order to the network node. The user data may comprise at least one of: the data of a logical channel, LCH, a service, and LCH groups. The control information may comprise at least one of: buffer status report, BSR, and power headroom report, PHR, and may be other types of control information. The first type of user data may be URLLC data, and the second type of the user data may be non-URLLC data, such as eMMB or mMTC data. The transmission resource may comprise at least one of: resources indicated by an uplink, UL, grant, and power headroom, PH, for the terminal device. The transmission resource situation may comprise at least one of: the resources indicated by the UL grant is sufficient or insufficient for the first type of user data; the PH value is higher than or lower than or equal to a predetermined threshold; there is power scaling of Physical Uplink Shared Channel (PUSCH) or Physical Uplink Control Channel (PUCCH) occurs, wherein the threshold may be determined based on at least one of: a reference Modulation and Coding Scheme, MCS, a number of Physical Resource Blocks, PRBs, an MCS table, and a predefined offset.

According to the exemplary method 200 illustrated in Fig.2, the terminal device such as a UE can transmit the first type of user data and the control information according to the determined first priority and the second priority, as shown in block 204.

In accordance with an exemplary embodiment, the transmission resource situation may comprise the transmission resource being sufficient or insufficient. Determining a first priority for a first type of user data and a second priority for control information according to a transmission resource situation may comprise: determining the first priority for the first type of user data higher than the second priority for control information when the transmission resource is sufficient for the first type of user data.

In accordance with another exemplary embodiment, the transmission resource situation may comprise the transmission resource being sufficient or insufficient. Determining a first priority for a first type of user data and a second priority for control information according to a transmission resource situation may comprise: determining the first priority for the first type of user data lower than the second priority for control information when the transmission resource is insufficient for the first type of user data.

In accordance with another exemplary embodiment, the transmission resource situation may comprise the transmission resource being sufficient or insufficient. Determining a first priority for a first type of user data and a second priority for control information according to a transmission resource situation may comprise: determining the first priority for the first type of user data higher than the second priority for control information when the transmission resource is sufficient for the first type of user data; and determining the first priority for the first type of user data lower than the second priority for control information when the transmission resource is insufficient for the first type of user data. In accordance with an exemplary embodiment, transmitting the first type of user data and the control information according to the determined first priority and the second priority may comprise: transmitting the first type of user data, and then transmitting the control information.

In accordance with another exemplary embodiment, transmitting the first type of user data and the control information according to the determined first priority and the second priority may also comprise: transmitting the first type of user data, without transmission of the control information.

In accordance with another exemplary embodiment, transmitting the first type of user data and the control information according to the determined first priority and the second priority may also comprise: transmitting the first type of user data, and then transmitting a scheduling request, SR, for transmission of the control information.

According to the exemplary method 200, when there are other types of user data to be transmitted, the terminal device such as a UE can further determine a third priority for a second type of user data, which may comprise: determining the third priority for the second type of user data lower than the first priority for the first type of user data and/or the second priority for control information, and then transmit the second type of user data according to the determined third priority for the second type of user data, which may comprise: transmitting the second type of user data after the transmission of the control information.

In accordance with an exemplary embodiment, when a regular/periodic BSR MAC CE (for simplicity only mention BSR afterwards) is triggered and there is an UL grant for URLLC data transmission: in case there is URLLC data and the resources indicated by the existing UL grant is insufficient to accommodate all URLLC data, the UE shall prioritize the BSR over URLLC data, i.e. BSR is assigned with existing resource first. Upon the reception of the BSR, the gNB may immediately send another UL grant to UE so that the UE can empty the buffered URLLC data as soon as possible. In case there is URLLC data and the resources indicated by the existing UL grant is sufficient to accommodate all URLLC data, the UE shall prioritize URLLC data over the BSR, i.e. assign the resources to URLLC data first. An SR can be triggered in order to transmit the data for the low priority service. In case there is no URLLC data, BSR is always higher prioritized over data of any other LCH (i.e. non-URLLC LCH).

In accordance with an exemplary embodiment, when a PHR MAC CE (for simplicity only mention PHR afterwards) is triggered. If the PH value is lower than a preconfigured threshold, which means a potential power limitation may occur, the PHR is higher prioritized over data of any LCH (including URLLC LCH), otherwise, PHR is lower prioritized than URLLC data. Upon the reception of the PHR, the gNB can take a timely proper action to enhance the data transmission ahead of occurrence of power limitation, e.g. UL TTI bundling or uplink beam refinement. If power scaling of Physical Uplink Shared Channel (PUSCH) or Physical Uplink Control Channel (PUCCH) occurs, which means that the P field of in the triggered PHR is set to 1, the PHR is prioritized over data of any LCH (including URLLC LCH), otherwise, the priority of PHR is lower than URLLC data, wherein the P field a field of the Extended PHR MAC Control Elements which is described in 3GPP TS 36.321 V15.2.0, which indicates whether the MAC entity applies power backoff due to power management. The MAC entity shall set P=1 if the corresponding P_{CMAX,c} field would have had a different value if no power backoff due to power management had been applied. Upon the reception of such PHR, the gNB can take a timely proper action to enhance the data transmission, e.g. UL TTI bundling or uplink beam refinement. If the PH is above a preconfigured threshold, which means that there is no power limitation for the UE, the PHR is lower prioritized than URLLC data. In any cases, PHR is higher prioritized than any other LCH, which means the non-URLLC LCH. As an example, the threshold for PH can be defined as a function of a set of parameters such as reference MCS, number of PRBs, MCS-table and a preconfigured offset etc..

According to the exemplary method 200, the terminal device such as a UE can further indicate the priority to the network node with an indicator contained in the first type of user data, such as the URLLC data, and can also indicate whether more user data with the first type is to be transmitted to the network node with an indicator contained in the first type of user data or reusing a R bit in MAC subheader of the first type of user data, wherein the R bit in MAC subheader is described in 3GPP TS 38.321 V15.2.0. A MAC PDU consists of one or more MAC subPDUs. Each MAC subPDU consists of one of the following: A MAC subheader only (including padding); A MAC subheader and a MAC SDU; A MAC subheader and a MAC CE; A MAC subheader and padding. The MAC SDUs are of variable sizes. Each MAC subheader corresponds to either a MAC SDU, a MAC CE, or padding. A MAC subheader except for fixed sized MAC CE, padding, and a MAC SDU of CCCH of size 48 bits consists of the four header fields R/F/LCID/L. A MAC subheader for fixed sized MAC CE, padding, and a MAC SDU of CCCH of size 48 bits consists of the two header fields R/LCID.

In accordance with an exemplary embodiment, the R bit in the subheader of MAC SDU for URLLC LCH can be used to indicate change of the priority order. If the R bit is set to 1 in the subhead of MAC SDU for URLLC LCH, it indicates that there is a BSR not transmitted. The gNB can send an UL grant to the UE so that the UE can transmit BSR as well as service data. If R bit is set to 0 in the subhead of MAC SDU for URLLC LCH, it means that BSR is not needed (i.e. there is no data to transmit for UE). In this case, the gNB does not need to send a UL grant to the UE.

In accordance with an exemplary embodiment, if there is data of URLLC LCH, and the resources indicated by the UL grant cannot provide even enough capacity to carry all the data of URLLC LCH, the BSR is not transmitted using the grant. But the R bit in the MAC SDU for URLLC LCH is used to indicate if there are more URLLC data to be transmitted in UE side. If the R bit in the MAC SDU for URLLC LCH is set, the gNB can send another UL grant for the URLLC data to be transmitted in the UE side.

Fig.3 is a flowchart illustrating a method 300 according to some embodiments of the present disclosure. As described in connection with Fig.2, the method 300 illustrated in Fig.3 may be performed by an apparatus implemented in a network node or communicatively coupled to a network node. In accordance with an exemplary embodiment, the network node such as a gNB may receive a first type of user data and control information according to a first priority and a second priority, as shown in block 302. In accordance with an exemplary embodiment, the first priority for a first type of user data and the second priority for control information is determined according to a transmission resource situation. In accordance with an exemplary embodiment, the network node may have configured priorities for the control information and the user data, while the terminal device can determine the priority between LCHs and MAC CEs by itself. Optionally, the terminal device can inform the new priority order to the network node. The user data may comprise at least one of: the data of a logical channel, LCH, a service, and LCH groups. The control information may comprise at least one of: buffer status report, BSR, and power headroom report, PHR, and may be other types of control information. The first type of user data may be URLLC data, and the second type of the user data may be non-URLLC data, such as eMMB or mMTC data. The transmission resource may comprise at least one of: resources indicated by an uplink, UL, grant, and power headroom, PH, for the terminal device. The transmission resource situation may comprise at least one of: the resources indicated by the UL grant is sufficient or insufficient for the first type of user data; the PH value is higher than or lower than or equal to a predetermined threshold; there is power scaling of Physical Uplink Shared Channel (PUSCH) or Physical Uplink Control Channel (PUCCH) occurs, wherein the threshold may be determined based on at least one of: a reference Modulation and Coding Scheme, MCS, a number of Physical Resource Blocks, PRBs, an MCS table, and a predefined offset.

In accordance with an exemplary embodiment, the transmission resource situation may comprise the transmission resource being sufficient or insufficient, and the first priority for a first type of user data and the second priority for control information is determined according to a transmission resource situation may comprise: the first priority for the first type of user data is determined higher than the second priority for control information when the transmission resource is sufficient for the first type of user data; and/or the first priority for the first type of user data is determined lower than the second priority for control information when the transmission resource is insufficient for the first type of user data.

In accordance with an exemplary embodiment, receiving the first type of user data and the control information according to the determined first priority and the second priority may comprise: receiving the first type of user data, and then receiving the control information; or receiving the first type of user data, without reception of the control information; or receiving the first type of user data, and then receiving a scheduling request, SR, for reception of the control information.

According to the exemplary method 300, when there are other types of user data to be received, the network node such as a gNB can further receive a second type of user data according to a third priority for the second type of user data, which may comprise: receive the second type of user data after the reception of the control information.

According to the exemplary method 300, the network node such as a gNB can further obtain the priority from the terminal device such as a UE from an indicator contained in the first type of user data, such as the URLLC data, and can also obtain whether more user data with the first type to be received from the terminal device such as a UE from an indicator contained in the first type of user data or reusing a R bit in MAC subheader of the first type of user data, wherein the R bit in MAC subheader is described in 3GPP TS 38.321 V15.2.0. A MAC PDU consists of one or more MAC subPDUs. Each MAC subPDU consists of one of the following: A MAC subheader only (including padding); A MAC subheader and a MAC SDU; A MAC subheader and a MAC CE; A MAC subheader and padding. The MAC SDUs are of variable sizes. Each MAC subheader corresponds to either a MAC SDU, a MAC CE, or padding. A MAC subheader except for fixed sized MAC CE, padding, and a MAC SDU of CCCH of size 48 bits consists of the four header fields R/F/LCID/L. A MAC subheader for fixed sized MAC CE, padding, and a MAC SDU of CCCH of size 48 bits consists of the two header fields R/LCID.

It will be realized that parameters, variables and settings related to the determination, transmission and reception described herein are just examples. Other suitable network settings, the associated configuration parameters and the specific values thereof may also be applicable to implement the proposed methods.

The proposed solution according to one or more exemplary embodiments can make UL resource allocation between user data such as an LCH (or service, logical channel group) and control information such as a BSR or PHR MAC CE optimized. In addition, the quality of service (QoS) of URLLC can be improved.

The various blocks shown in Fig.2 and Fig.3 may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

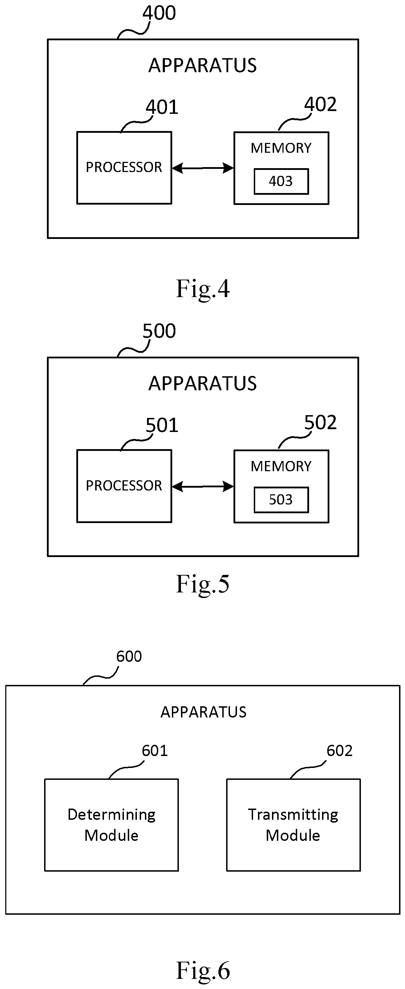

Fig.4 and Fig.5 are block diagrams illustrating an apparatus 400 and 500 according to various embodiments of the present disclosure. As shown in Fig.4 and Fig.5, the apparatus 400 and 500 may comprise one or more processors such as processor 401 and 501, and one or more memories such as memory 402 and 502, storing computer program codes 403 and 503. The memory 402 and 502 may be non-transitory machine/processor/computer readable storage medium. In accordance with some exemplary embodiments, the apparatus 400 and 500 may be implemented as an integrated circuit chip or module that can be plugged or installed into a terminal device as described with respect to Fig.2, and a network node as described with respect to Fig.3.

In some implementations, the one or more memories 402 and 502, and the computer program codes 403 and 503, may be configured to, with the one or more processors 401 and 501, cause the apparatus 400 and 500 at least to perform any operation of the method as described in connection with Fig.2 and Fig.3. In other implementations, the one or more memories 402 and 502, and the computer program codes 403 and 503, may be configured to, with the one or more processors 401 and 501, cause the apparatus 400 and 500 at least to perform any operation of the method as described in connection with Fig.2 and Fig.3.

Fig.6 is a block diagram illustrating an apparatus 600 according to some embodiments of the present disclosure. As shown in Fig.6, the apparatus 600 may comprise a determining module 601 and a transmitting module 602. In an exemplary embodiment, the apparatus 600 may be implemented in a terminal device such as a UE. The determining module 601 may be operable to carry out the operation in block 202, and the transmitting module 602 may be operable to carry out the operation in block 204. Optionally, the determining module 601 and/or the transmitting module 602 may be operable to carry out more or less operations to implement the proposed methods according to the exemplary embodiments of the present disclosure.

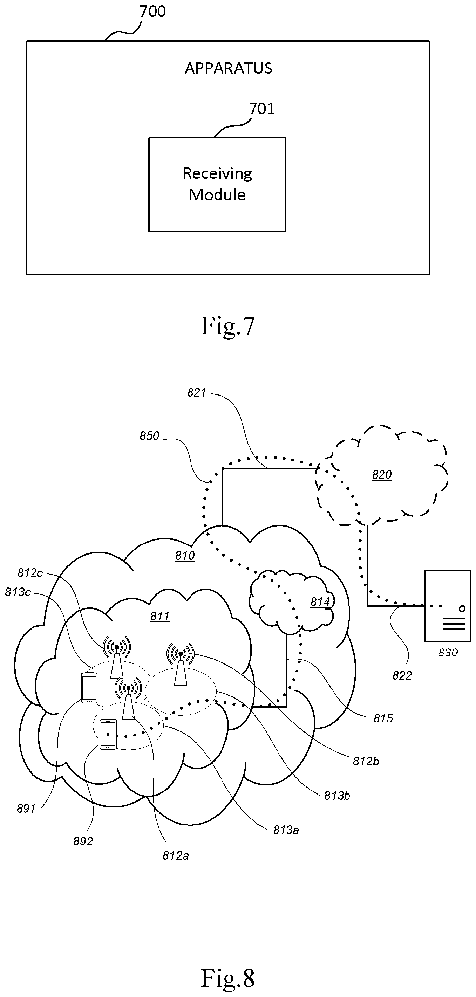

Fig.7 is a block diagram illustrating an apparatus 700 according to some embodiments of the present disclosure. As shown in Fig.7, the apparatus 700 may comprise a receiving module 70. In an exemplary embodiment, the apparatus 700 may be implemented in a network node such as a gNB. The receiving module 701 may be operable to carry out the operation in block 302. Optionally, receiving module 701 may be operable to carry out more or less operations to implement the proposed methods according to the exemplary embodiments of the present disclosure.

Fig.8 is a block diagram illustrating a telecommunication network connected via an intermediate network to a host computer in accordance with some embodiments of the present disclosure.

With reference to Fig.8, in accordance with an embodiment, a communication system includes a telecommunication network 810, such as a 3GPP-type cellular network, which comprises an access network 811, such as a radio access network, and a core network 814. The access network 811 comprises a plurality of base stations 812a, 812b, 812c, such as NBs, eNBs, gNBs or other types of wireless access points, each defining a corresponding coverage area 813a, 813b, 813c. Each base station 812a, 812b, 812c is connectable to the core network 814 over a wired or wireless connection 815. A first UE 881 located in a coverage area 813c is configured to wirelessly connect to, or be paged by, the corresponding base station 812c. A second UE 882 in a coverage area 813a is wirelessly connectable to the corresponding base station 812a. While a plurality of UEs 881, 882 are illustrated in this example, the disclosed embodiments are equally applicable to a situation where a sole UE is in the coverage area or where a sole UE is connecting to the corresponding base station 812.

The telecommunication network 810 is itself connected to a host computer 830, which may be embodied in the hardware and/or software of a standalone server, a cloud-implemented server, a distributed server or as processing resources in a server farm. The host computer 830 may be under the ownership or control of a service provider, or may be operated by the service provider or on behalf of the service provider. Connections 821 and 822 between the telecommunication network 810 and the host computer 830 may extend directly from the core network 814 to the host computer 830 or may go via an optional intermediate network 820. An intermediate network 820 may be one of, or a combination of more than one of, a public, private or hosted network; the intermediate network 820, if any, may be a backbone network or the Internet; in particular, the intermediate network 820 may comprise two or more sub-networks (not shown).

The communication system of Fig.8 as a whole enables connectivity between the connected UEs 881, 882 and the host computer 830. The connectivity may be described as an over-the-top (OTT) connection 850. The host computer 830 and the connected UEs 881, 882 are configured to communicate data and/or signaling via the OTT connection 850, using the access network 811, the core network 814, any intermediate network 820 and possible further infrastructure (not shown) as intermediaries. The OTT connection 850 may be transparent in the sense that the participating communication devices through which the OTT connection 850 passes are unaware of routing of uplink and downlink communications. For example, the base station 812 may not or need not be informed about the past routing of an incoming downlink communication with data originating from the host computer 830 to be forwarded (e.g., handed over) to a connected UE 881. Similarly, the base station 812 need not be aware of the future routing of an outgoing uplink communication originating from the UE 881 towards the host computer 830.

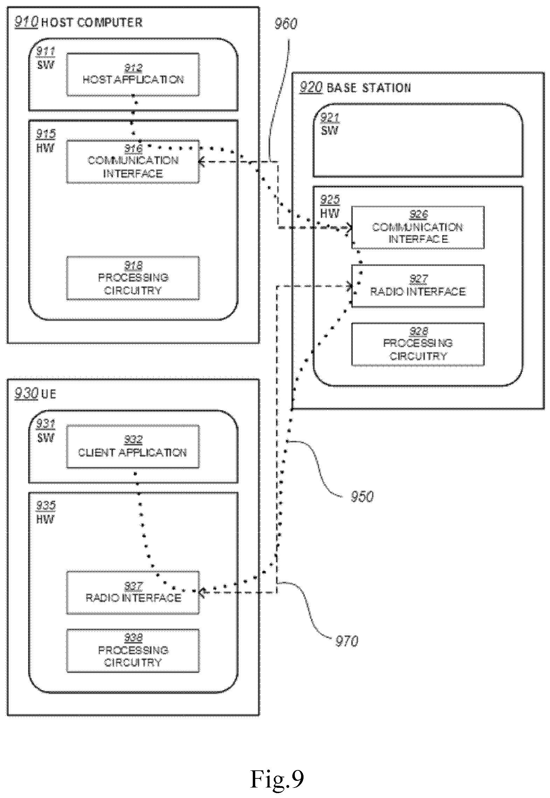

Fig.9 is a block diagram illustrating a host computer communicating via a base station with a UE over a partially wireless connection in accordance with some embodiments of the present disclosure.

Example implementations, in accordance with an embodiment, of the UE, base station and host computer discussed in the preceding paragraphs will now be described with reference to Fig.9. In a communication system 900, a host computer 99 comprises hardware 915 including a communication interface 916 configured to set up and maintain a wired or wireless connection with an interface of a different communication device of the communication system 900. The host computer 99 further comprises a processing circuitry 918, which may have storage and/or processing capabilities. In particular, the processing circuitry 918 may comprise one or more programmable processors, application-specific integrated circuits, field programmable gate arrays or combinations of these (not shown) adapted to execute instructions. The host computer 99 further comprises software 911, which is stored in or accessible by the host computer 99 and executable by the processing circuitry 918. The software 911 includes a host application 912. The host application 912 may be operable to provide a service to a remote user, such as UE 930 connecting via an OTT connection 950 terminating at the UE 930 and the host computer 99. In providing the service to the remote user, the host application 912 may provide user data which is transmitted using the OTT connection 950.

The communication system 900 further includes a base station 920 provided in a telecommunication system and comprising hardware 925 enabling it to communicate with the host computer 99 and with the UE 930. The hardware 925 may include a communication interface 926 for setting up and maintaining a wired or wireless connection with an interface of a different communication device of the communication system 900, as well as a radio interface 927 for setting up and maintaining at least a wireless connection 970 with the UE 930 located in a coverage area (not shown in Fig.9) served by the base station 920. The communication interface 926 may be configured to facilitate a connection 960 to the host computer 99. The connection 960 may be direct or it may pass through a core network (not shown in Fig.9) of the telecommunication system and/or through one or more intermediate networks outside the telecommunication system. In the embodiment shown, the hardware 925 of the base station 920 further includes a processing circuitry 928, which may comprise one or more programmable processors, application-specific integrated circuits, field programmable gate arrays or combinations of these (not shown) adapted to execute instructions. The base station 920 further has software 921 stored internally or accessible via an external connection.

The communication system 900 further includes the UE 930 already referred to. Its hardware 935 may include a radio interface 937 configured to set up and maintain a wireless connection 970 with a base station serving a coverage area in which the UE 930 is currently located. The hardware 935 of the UE 930 further includes a processing circuitry 938, which may comprise one or more programmable processors, application-specific integrated circuits, field programmable gate arrays or combinations of these (not shown) adapted to execute instructions. The UE 930 further comprises software 931, which is stored in or accessible by the UE 930 and executable by the processing circuitry 938. The software 931 includes a client application 932. The client application 932 may be operable to provide a service to a human or non-human user via the UE 930, with the support of the host computer 99. In the host computer 99, an executing host application 912 may communicate with the executing client application 932 via the OTT connection 950 terminating at the UE 930 and the host computer 99. In providing the service to the user, the client application 932 may receive request data from the host application 912 and provide user data in response to the request data. The OTT connection 950 may transfer both the request data and the user data. The client application 932 may interact with the user to generate the user data that it provides.

It is noted that the host computer 99, the base station 920 and the UE 930 illustrated in Fig.9 may be similar or identical to the host computer 930, one of base stations 912a, 912b, 912c and one of UEs 991, 992 of Fig.9, respectively. This is to say, the inner workings of these entities may be as shown in Fig.9 and independently, the surrounding network topology may be that of Fig.9.

In Fig.9, the OTT connection 950 has been drawn abstractly to illustrate the communication between the host computer 99 and the UE 930 via the base station 920, without explicit reference to any intermediary devices and the precise routing of messages via these devices. Network infrastructure may determine the routing, which it may be configured to hide from the UE 930 or from the service provider operating the host computer 99, or both. While the OTT connection 950 is active, the network infrastructure may further take decisions by which it dynamically changes the routing (e.g., on the basis of load balancing consideration or reconfiguration of the network).

Wireless connection 970 between the UE 930 and the base station 920 is in accordance with the teachings of the embodiments described throughout this disclosure. One or more of the various embodiments improve the performance of OTT services provided to the UE 930 using the OTT connection 950, in which the wireless connection 970 forms the last segment. More precisely, the teachings of these embodiments may improve the latency and the power consumption, and thereby provide benefits such as lower complexity, reduced time required to access a cell, better responsiveness, extended battery lifetime, etc.

A measurement procedure may be provided for the purpose of monitoring data rate, latency and other factors on which the one or more embodiments improve. There may further be an optional network functionality for reconfiguring the OTT connection 950 between the host computer 99 and the UE 930, in response to variations in the measurement results. The measurement procedure and/or the network functionality for reconfiguring the OTT connection 950 may be implemented in software 911 and hardware 915 of the host computer 99 or in software 931 and hardware 935 of the UE 930, or both. In embodiments, sensors (not shown) may be deployed in or in association with communication devices through which the OTT connection 950 passes; the sensors may participate in the measurement procedure by supplying values of the monitored quantities exemplified above, or supplying values of other physical quantities from which the software 911, 931 may compute or estimate the monitored quantities. The reconfiguring of the OTT connection 950 may include message format, retransmission settings, preferred routing etc.; the reconfiguring need not affect the base station 920, and it may be unknown or imperceptible to the base station 920. Such procedures and functionalities may be known and practiced in the art. In certain embodiments, measurements may involve proprietary UE signaling facilitating the host computer 99's measurements of throughput, propagation times, latency and the like. The measurements may be implemented in that the software 911 and 931 causes messages to be transmitted, in particular empty or 'dummy' messages, using the OTT connection 950 while it monitors propagation times, errors etc.

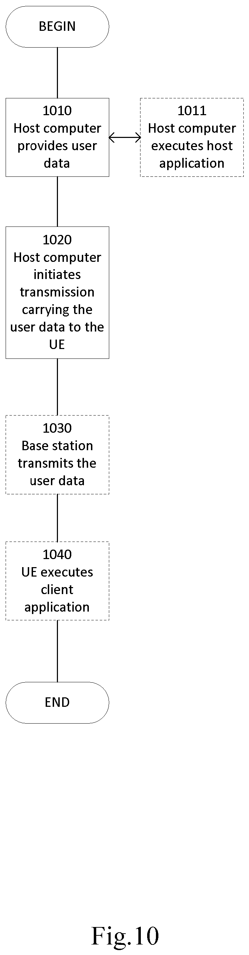

Fig.10 is a flowchart illustrating a method implemented in a communication system, in accordance with an embodiment. The communication system includes a host computer, a base station and a UE which may be those described with reference to Fig.9 and Fig.10. For simplicity of the present disclosure, only drawing references to Fig.10 will be included in this section. In step 1010, the host computer provides user data. In substep 1010 (which may be optional) of step 1010, the host computer provides the user data by executing a host application. In step 1020, the host computer initiates a transmission carrying the user data to the UE. In step 1030 (which may be optional), the base station transmits to the UE the user data which was carried in the transmission that the host computer initiated, in accordance with the teachings of the embodiments described throughout this disclosure. In step 1040 (which may also be optional), the UE executes a client application associated with the host application executed by the host computer.

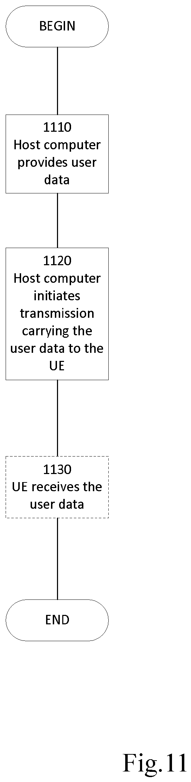

Fig.11 is a flowchart illustrating a method implemented in a communication system, in accordance with an embodiment. The communication system includes a host computer, a base station and a UE which may be those described with reference to Fig.9 and Fig.10. For simplicity of the present disclosure, only drawing references to Fig.11 will be included in this section. In step 1110 of the method, the host computer provides user data. In an optional substep (not shown) the host computer provides the user data by executing a host application. In step 1120, the host computer initiates a transmission carrying the user data to the UE. The transmission may pass via the base station, in accordance with the teachings of the embodiments described throughout this disclosure. In step 1130 (which may be optional), the UE receives the user data carried in the transmission.

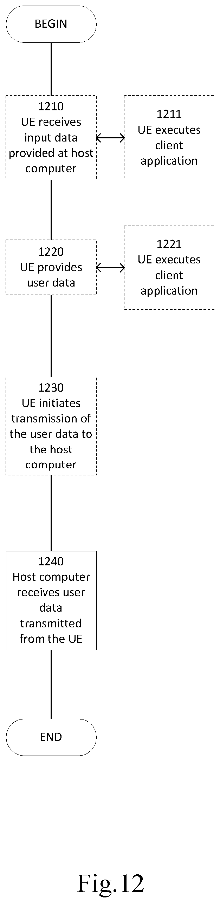

Fig.12 is a flowchart illustrating a method implemented in a communication system, in accordance with an embodiment. The communication system includes a host computer, a base station and a UE which may be those described with reference to Fig.9 and Fig. 10. For simplicity of the present disclosure, only drawing references to Fig.12 will be included in this section. In step 1210 (which may be optional), the UE receives input data provided by the host computer. Additionally or alternatively, in step 1220, the UE provides user data. In substep 1221 (which may be optional) of step 1220, the UE provides the user data by executing a client application. In substep 1211 (which may be optional) of step 1210, the UE executes a client application which provides the user data in reaction to the received input data provided by the host computer. In providing the user data, the executed client application may further consider user input received from the user. Regardless of the specific manner in which the user data was provided, the UE initiates, in substep 1230 (which may be optional), transmission of the user data to the host computer. In step 1240 of the method, the host computer receives the user data transmitted from the UE, in accordance with the teachings of the embodiments described throughout this disclosure.

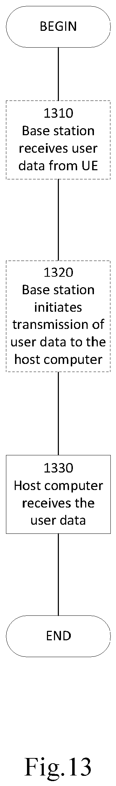

Fig.13 is a flowchart illustrating a method implemented in a communication system, in accordance with an embodiment. The communication system includes a host computer, a base station and a UE which may be those described with reference to Fig.9 and Fig. 10. For simplicity of the present disclosure, only drawing references to Fig.13 will be included in this section. In step 1310 (which may be optional), in accordance with the teachings of the embodiments described throughout this disclosure, the base station receives user data from the UE. In step 1320 (which may be optional), the base station initiates transmission of the received user data to the host computer. In step 1330 (which may be optional), the host computer receives the user data carried in the transmission initiated by the base station.

In general, the various exemplary embodiments may be implemented in hardware or special purpose chips, circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), etc. As will be appreciated by one of skill in the art, the function of the program modules may be combined or distributed as desired in various embodiments. In addition, the function may be embodied in whole or partly in firmware or hardware equivalents such as integrated circuits, field programmable gate arrays (FPGA), and the like.

## Claims

1. A method (200) implemented at a terminal device, comprising:
determining (202) a first priority for a first type of user data and a second priority for control information according to a transmission resource situation;
transmitting (204) the first type of user data and the control information according to the determined first priority and the second priority;
**characterized in that**, the transmission resource situation comprises whether a transmission resource is sufficient, and determining (202) a first priority for a first type of user data and a second priority for control information according to a transmission resource situation comprises:
determining the first priority for the first type of user data higher than the second priority for control information when the transmission resource is sufficient for the first type of user data; and
determining the first priority for the first type of user data lower than the second priority for control information when the transmission resource is insufficient for the first type of user data.

2. The method according to claim 1, wherein transmitting (204) the first type of user data and the control information according to the determined first priority and the second priority comprises:
transmitting the first type of user data, and then transmitting the control information; or
transmitting the first type of user data, without transmission of the control information; or
transmitting the first type of user data, and then transmitting a scheduling request, SR, for transmission of the control information.

3. The method according to any of claims 1-2, further comprising:
determining a third priority for a second type of user data;
wherein determining a third priority for a second type of user data comprises:
determining the third priority for the second type of user data lower than the first priority for the first type of user data and/or the second priority for control information.

4. The method according to claim 3, further comprising:
transmitting the second type of user data according to the determined third priority for the second type of user data;
wherein transmitting the second type of user data according to the determined third priority for the second type of user data comprises:
transmitting the second type of user data after the transmission of the control information.

5. The method according to any of claims 1-4, wherein the user data comprises at least one of: the data of a logical channel, LCH, a service, and LCH groups.

6. The method according to any of claims 1-5, wherein the control information comprises at least one of: buffer status report, BSR, and power headroom report, PHR.

7. The method according to any of claims 1-6, wherein the first type of user data comprises Ultra-Reliable Low-Latency Communication, URLLC, data, and/or the second type of user data comprises non-URLLC data.

8. The method according to any of claims 1-7, wherein the transmission resource comprises at least one of: resources indicated by an uplink, UL, grant, and power headroom, PH, for the terminal device.

9. The method according to claim 8, wherein the transmission resource situation comprises at least one of:
the resources indicated by the UL grant is insufficient for the first type of user data;
the PH value is lower than or equal to a predetermined threshold;
there is power scaling of Physical Uplink Shared Channel, PUSCH or Physical Uplink Control Channel, PUCCH occurs;
wherein the threshold is determined based on at least one of: a reference Modulation and Coding Scheme, MCS, a number of Physical Resource Blocks, PRBs, an MCS table, and a predefined offset.

10. The method according to any of claims 1-9, further comprising:
indicating priority information to a network node with an indicator contained in the first type of user data.

11. The method according to any of claims 1-10, further comprising:
indicating whether more user data with the first type to be transmitted to a network node with an indicator contained in the first type of user data or reusing a R bit in MAC subheader of the first type of user data.

12. An apparatus (600) implemented in a terminal device, comprising:
a determining module (601) configured to determine a first priority for a first type of user data and a second priority for control information according to a transmission resource situation; and
a transmitting module (602) configured to transmit the first type of user data and the control information according to the determined first priority and the second priority; **characterized in that**, the transmission resource situation comprises whether a transmission resource is sufficient, and the determining module (601) is configured to determine a first priority for a first type of user data and a second priority for control information according to a transmission resource situation in a following way:
determining the first priority for the first type of user data higher than the second priority for control information when the transmission resource is sufficient for the first type of user data; and
determining the first priority for the first type of user data lower than the second priority for control information when the transmission resource is insufficient for the first type of user data.

## Patentansprüche

1. Verfahren (200), das bei einem Endgerät implementiert wird, umfassend:
Bestimmen (202) einer ersten Priorität für einen ersten Typ von Benutzerdaten und einer zweiten Priorität für Steuerinformationen gemäß einer Übertragungsressourcensituation;
Übertragen (204) des ersten Typs von Benutzerdaten und der Steuerinformationen gemäß der bestimmten ersten Priorität und der zweiten Priorität;
**dadurch gekennzeichnet, dass** die Übertragungsressourcensituation umfasst, ob eine Übertragungsressource ausreichend ist, und Bestimmen (202) einer ersten Priorität für einen ersten Typ von Benutzerdaten und einer zweiten Priorität für Steuerinformationen gemäß einer Übertragungsressourcensituation Folgendes umfasst:
Bestimmen der ersten Priorität für den ersten Typ von Benutzerdaten höher als die zweite Priorität für Steuerinformationen, wenn die Übertragungsressource für den ersten Typ von Benutzerdaten ausreichend ist; und
Bestimmen der ersten Priorität für den ersten Typ von Benutzerdaten niedriger als die zweite Priorität für Steuerinformationen, wenn die Übertragungsressource für den ersten Typ von Benutzerdaten unzureichend ist.

2. Verfahren nach Anspruch 1, wobei Übertragen (204) des ersten Typs von Benutzerdaten und der Steuerinformationen gemäß der bestimmten ersten Priorität und der zweiten Priorität Folgendes umfasst:
Übertragen des ersten Typs von Benutzerdaten und dann Übertragen der Steuerinformationen; oder
Übertragen des ersten Typs von Benutzerdaten ohne Übertragung der Steuerinformationen; oder
Übertragen des ersten Typs von Benutzerdaten und dann Übertragen einer Planungsanforderung, SR (Scheduling Request), zur Übertragung der Steuerinformationen.

3. Verfahren nach einem der Ansprüche 1-2, weiter umfassend:
Bestimmen einer dritten Priorität für einen zweiten Typ von Benutzerdaten;
wobei Bestimmen einer dritten Priorität für einen zweiten Typ von Benutzerdaten Folgendes umfasst:
Bestimmen der dritten Priorität für den zweiten Typ von Benutzerdaten niedriger als die erste Priorität für den ersten Typ von Benutzerdaten und/oder die zweite Priorität für Steuerinformationen.

4. Verfahren nach Anspruch 3, weiter umfassend:
Übertragen des zweiten Typs von Benutzerdaten gemäß der bestimmten dritten Priorität für den zweiten Typ von Benutzerdaten;
wobei Übertragen des zweiten Typs von Benutzerdaten gemäß der bestimmten dritten Priorität für den zweiten Typ von Benutzerdaten Folgendes umfasst:
Übertragen des zweiten Typs von Benutzerdaten nach der Übertragung der Steuerinformationen.

5. Verfahren nach einem der Ansprüche 1-4, wobei die Benutzerdaten mindestens eines der Folgenden umfassen: die Daten eines logischen Kanals, LCH (Logical Channel), einen Dienst und LCH-Gruppen.

6. Verfahren nach einem der Ansprüche 1-5, wobei die Steuerinformationen mindestens eines der Folgenden umfassen: Pufferstatusbericht, BSR (Buffer Status Report), und Leistungsreservebericht, PHR (Power Headroom Report).

7. Verfahren nach einem der Ansprüche 1-6, wobei der erste Typ von Benutzerdaten ultrazuverlässige latenzarme Kommunikationsdaten, URLLC-Daten ("Ultra Reliable Low-Latency Communication"-Daten) umfasst und/oder der zweite Typ von Benutzerdaten Nicht-URLLC-Daten umfasst.

8. Verfahren nach einem der Ansprüche 1-7, wobei die Übertragungsressource mindestens eines der Folgenden umfasst: Ressourcen, die von einer Uplink-Bestätigung, UL-Bestätigung, angegeben werden und Leistungsreserve, PH (Power Headroom), für das Endgerät.

9. Verfahren nach Anspruch 8, wobei die Übertragungsressourcensituation mindestens eines der Folgenden umfasst:
die Ressourcen, die von der UL-Bestätigung angegeben werden, sind für den ersten Typ von Benutzerdaten unzureichend;
der PH-Wert ist niedriger als oder gleich einem vorgegebenen Schwellenwert;
es tritt eine Leistungsskalierung eines physikalischen geteilten Uplink-Kanals, PUSCH (Physical Uplink Shared Channel), oder physikalischen Uplink-Steuerkanals, PUCCH (Physical Uplink Control Channel), auf;
wobei der Schwellenwert basierend auf mindestens einem der Folgenden bestimmt wird: einem Bezugs-Modulations- und Codierungsschema, MCS (Modulation and Coding Scheme), einer Anzahl von physikalischen Ressourcenblöcken, PRBs (Physical Resource Blocks), einer MCS-Tabelle und einem vordefinierten Offset.

10. Verfahren nach einem der Ansprüche 1-9, weiter umfassend:
Angeben von Prioritätsinformationen für einen Netzwerkknoten mit einem Indikator, der in dem ersten Typ von Benutzerdaten enthalten ist.

11. Verfahren nach einem der Ansprüche 1-10, weiter umfassend:
Angeben, ob mehr Benutzerdaten mit dem ersten Typ an einen Netzwerkknoten zu übertragen sind, mit einem Indikator, der in dem ersten Typ von Benutzerdaten enthalten ist, oder Wiederverwenden eines R Bits im MAC-Subheader des ersten Typs von Benutzerdaten.

12. Vorrichtung (600), die in einem Endgerät implementiert ist, umfassend:
ein Bestimmungsmodul (601), das dazu konfiguriert ist, eine erste Priorität für einen ersten Typ von Benutzerdaten und eine zweite Priorität für Steuerinformationen gemäß einer Übertragungsressourcensituation zu bestimmen; und
ein Übertragungsmodul (602), das dazu konfiguriert ist, den ersten Typ von Benutzerdaten und die Steuerinformationen gemäß der bestimmten ersten Priorität und der zweiten Priorität zu übertragen;
**dadurch gekennzeichnet, dass** die Übertragungsressourcensituation umfasst, ob eine Übertragungsressource ausreichend ist, und das Bestimmungsmodul (601) dazu konfiguriert ist, eine erste Priorität für einen ersten Typ von Benutzerdaten und eine zweite Priorität für Steuerinformationen gemäß einer Übertragungsressourcensituation auf folgende Weise zu bestimmen:
Bestimmen der ersten Priorität für den ersten Typ von Benutzerdaten höher als die zweite Priorität für Steuerinformationen, wenn die Übertragungsressource für den ersten Typ von Benutzerdaten ausreichend ist; und
Bestimmen der ersten Priorität für den ersten Typ von Benutzerdaten niedriger als die zweite Priorität für Steuerinformationen, wenn die Übertragungsressource für den ersten Typ von Benutzerdaten unzureichend ist.

## Revendications

1. Procédé (200) mis en œuvre au niveau d'un dispositif terminal, comprenant :
la détermination (202) d'une première priorité pour un premier type de données utilisateur et d'une deuxième priorité pour des informations de commande selon une situation de ressource de transmission ;
la transmission (204) du premier type de données utilisateur et des informations de commande selon la première priorité déterminée et la deuxième priorité déterminée ;
**caractérisé en ce que** la situation de ressource de transmission comprend si une ressource de transmission est ou non suffisante, et la détermination (202) d'une première priorité pour un premier type de données utilisateur et d'une deuxième priorité pour des informations de commande selon une situation de ressource de transmission comprend :
la détermination que la première priorité pour le premier type de données utilisateur est supérieure à la deuxième priorité pour des informations de commande lorsque la ressource de transmission est suffisante pour le premier type de données utilisateur ; et
la détermination que la première priorité pour le premier type de données utilisateur est inférieure à la deuxième priorité pour des informations de commande lorsque la ressource de transmission est insuffisante pour le premier type de données utilisateur.

2. Procédé selon la revendication 1, dans lequel la transmission (204) du premier type de données utilisateur et des informations de commande selon la première priorité déterminée et la deuxième priorité déterminée comprend :
la transmission du premier type de données utilisateur, puis la transmission des informations de commande ; ou
la transmission du premier type de données utilisateur, sans transmission des informations de commande ; ou
la transmission du premier type de données utilisateur, puis la transmission d'une demande de planification, SR, pour une transmission des informations de commande.

3. Procédé selon la revendication 1 ou 2, comprenant en outre :
la détermination d'une troisième priorité pour un deuxième type de données utilisateur ;
dans lequel la détermination d'une troisième priorité pour un deuxième type de données utilisateur comprend :
la détermination que la troisième priorité pour le deuxième type de données utilisateur est inférieure à la première priorité pour le premier type de données utilisateur et/ou à la deuxième priorité pour des informations de commande.

4. Procédé selon la revendication 3, comprenant en outre :
la transmission du deuxième type de données utilisateur selon la troisième priorité déterminée pour le deuxième type de données utilisateur ;
dans lequel la transmission du deuxième type de données utilisateur selon la troisième priorité déterminée pour le deuxième type de données utilisateur comprend :
la transmission du deuxième type de données utilisateur après la transmission des informations de commande.

5. Procédé selon l'une quelconque des revendications 1 à 4, dans lequel les données utilisateur comprennent au moins l'un parmi : les données d'un canal logique, LCH, un service, et des groupes de LCH.

6. Procédé selon l'une quelconque des revendications 1 à 5, dans lequel les informations de commande comprennent au moins l'un parmi : un rapport de statut de mémoire tampon, BSR, et un rapport de marge de puissance, PHR.

7. Procédé selon l'une quelconque des revendications 1 à 6, dans lequel le premier type de données utilisateur comprend des données de communication ultra fiable à faible latence, URLLC, et/ou le deuxième type de données utilisateur comprend des données non-URLLC.

8. Procédé selon l'une quelconque des revendications 1 à 7, dans lequel la ressource de transmission comprend au moins l'une parmi : des ressources indiquées par un octroi de liaison montante, UL, et une marge de puissance, PH, pour le dispositif terminal.

9. Procédé selon la revendication 8, dans lequel la situation de ressource de transmission comprend au moins l'un des cas suivants :
les ressources indiquées par l'octroi UL sont insuffisantes pour le premier type de données utilisateur ;
la valeur de PH est inférieure ou égale à un seuil prédéterminé ;
il y a une mise à l'échelle de puissance de canal partagé de liaison montante physique, PUSCH, ou de canal de commande de liaison montante physique, PUCCH ;
dans lequel le seuil est déterminé sur la base d'au moins l'un parmi : un schéma de modulation et de codage, MCS, de référence, un nombre de blocs de ressources physiques, PRB, une table de MCS et un décalage prédéfini.

10. Procédé selon l'une quelconque des revendications 1 à 9, comprenant en outre :
l'indication d'informations de priorité à un nœud de réseau avec un indicateur contenu dans le premier type de données utilisateur.

11. Procédé selon l'une quelconque des revendications 1 à 10, comprenant en outre :
l'indication s'il y a plus de données utilisateur avec le premier type à transmettre à un nœud de réseau avec un indicateur contenu dans le premier type de données utilisateur ou en réutilisant un bit R dans un sous-entête MAC du premier type de données utilisateur.

12. Appareil (600) mis en œuvre dans un dispositif terminal, comprenant :
un module de détermination (601) configuré pour déterminer une première priorité pour un premier type de données utilisateur et une deuxième priorité pour des informations de commande selon une situation de ressource de transmission ; et
un module de transmission (602) configuré pour transmettre le premier type de données utilisateur et les informations de commande selon la première priorité déterminée et la deuxième priorité déterminée ;
**caractérisé en ce que** la situation de ressource de transmission comprend si une ressource de transmission est ou non suffisante, et le module de détermination (601) est configuré pour déterminer une première priorité pour un premier type de données utilisateur et une deuxième priorité pour des informations de commande selon une situation de ressource de transmission de l'une des manières suivantes :
la détermination que la première priorité pour le premier type de données utilisateur est supérieure à la deuxième priorité pour des informations de commande lorsque la ressource de transmission est suffisante pour le premier type de données utilisateur ; et
la détermination que la première priorité pour le premier type de données utilisateur est inférieure à la deuxième priorité pour des informations de commande lorsque la ressource de transmission est insuffisante pour le premier type de données utilisateur.
